# EUROPÄISCHE PATENTSCHRIFT

(11) **EP 1 488 962 B1**
(45) Veröffentlichungstag und Bekanntmachung des Hinweises auf die Patenterteilung: **14.09.2005**
(21) Anmeldenummer: 04012852.2
(22) Anmeldetag: 01.06.2004
(51) Int. Cl.: B60R 21/02, B66F 9/075, B66F 17/00, B60R 21/13

(54) **Rückhaltesystem für einen Fahrer eines Fahrzeugs**
Safety device for a driver of a vehicle
Dispositif de sécurité pour le conducteur d'un véhicule

(30) Priorität: 16.06.2003 DE 20309391 U
(43) Veröffentlichungstag der Anmeldung: 22.12.2004
(73) Patentinhaber: Sauermann, Hans, 85119 Ernsgaden (DE)
(72) Erfinder: Sauermann, Hans, 85119 Ernsgaden (DE)
(74) Vertreter: Witzany, Manfred

(56) Entgegenhaltungen:
- WO-A-01/58725
- DE-U- 20 017 130
- DE-U- 20 202 522

## Beschreibung

Die Erfindung betrifft ein Rückhaltesystem für einen Fahrer eines Fahrzeugs, insbesondere eines Flurförderfahrzeugs gemäß dem Oberbegriff des Patentanspruchs 1.

Aus der gattungsbildenden EP 1 145 919 A2 ist ein Rückhaltesystem für ein Fahrzeug bekannt, welches von seitlich neben dem Fahrersitz angeordneten Schutzbügeln gebildet ist. Dieser Schutzbügel ist durch eine quer zur Fahrzeuglängserstrekkung verlaufende Welle zwischen einer vertikalen Freigabestellung und einer horizontalen Rückhaltestellung verschwenkbar. Dieses Rückhaltesystem hat sich in der Praxis gut bewährt, da es den Fahrer insbesondere beim Umkippen des Fahrzeugs ausreichend gut vor schweren Verletzungen schützt.

Der Erfindung liegt die Aufgabe zugrunde, ein Rückhaltesystem der eingangs genannten Art zu schaffen, welches einen guten Schutz des Fahrers beim Umkippen des Fahrzeugs gewährt, wobei das Rückhaltesystem eine Wartung des Fahrzeugs nicht behindern soll.

Diese Aufgabe wird erfindungsgemäß mit den Merkmalen des Patentanspruchs 1 gelöst.

Das Rückhaltesystem gemäß Anspruch 1 weist mindestens einen seitlich neben dem Fahrersitz angeordneten Schutzbügel auf, der um eine Welle zwischen einer in etwa vertikalen Freigabestellung und einer in etwa horizontalen Rückhaltestellung verschwenkbar ist. In der Freigabestellung kann der Fahrer ohne Behinderung durch den Schutzbügel in das Fahrzeug ein- bzw. aus diesem aussteigen, was insbesondere unter beengten Platzverhältnissen, wie beispielsweise in Lagern, von Bedeutung ist. Außerdem besteht so nicht die Gefahr, daß sich der Fahrer durch das Rückhaltesystem behindert fühlt, so daß das Rückhaltesystem eine ausreichend hohe Akzeptanz durch den Fahrer besitzt und nicht von diesem einfach abgebaut wird. Vorzugsweise befindet sich der Schutzbügel in der Rückhaltestellung im Hüftbereich des Fahrers und erstreckt sich über mindestens die Hälfte des Fahrersitzes, um einen ausreichenden Schutz des Fahrers beim Umkippen des Fahrzeugs zu gewährleisten. Insbesondere bei sehr kleinen Staplern ergibt sich das Problem, daß für den Fahrer nur ein sehr beschränkter Raum zur Verfügung steht. Um die Akzeptanz des Rückhaltesystems durch den Fahrer nicht zu gefährden, wird der Schutzbügel in diesem Fall bevorzugt im Bereich zwischen den Fahrzeugholmen vorgesehen. Dabei liegt der Schutzbügel in seinem gesamten Verschwenkbereich zwischen den Holmen des Fahrzeugs. Zu Wartungszwekken muß jedoch die Motorhaube des Fahrzeugs, die sich in der Regel unter dem Fahrersitz befindet, geöffnet werden. Nur auf diese Weise können erforderliche Wartungsarbeiten wie das Laden einer Batterie oder das Säubern eines Kühlers vorgenommen werden. Befinden sich die Schutzbügel im Bereich zwischen den Holmen des Fahrzeugs, so schlagen diese jedoch beim Öffnen der Motorhaube an den Holmen an, so daß die Motorhaube nicht mehr vollständig geöffnet werden kann. Zur Lösung dieses Problems ist der Schutzbügel zusätzlich um eine in etwa vertikale Achse verschwenkbar und/oder quer zum Fahrzeug verschiebbar abgestützt. Die Verschwenkung des Schutzbügels erfolgt dabei zwischen einer in etwa längs zum Fahrzeug ausgerichteten Schutzstellung und einer in etwa quer zum Fahrzeug ausgerichteten Wartungsstellung. Dabei ist es unerheblich, ob der Schutzbügel nach außen oder nach innen zum Fahrersitz hin verschwenkt wird. In jedem Fall ist gewährleistet, daß der Schutzbügel unabhängig von seiner Schwenklage um die horizontale Achse ausreichend weit von den Holmen des Fahrzeugs beabstandet ist, um ein Anschlagen an diesen zu verhindern. Damit kann die Motorhaube des Fahrzeugs problemlos geöffnet werden, ohne zuvor das Rückhaltesystem demontieren zu müssen.

Um eine ausreichende Schutzwirkung des Rückhaltesystems sicherzustellen, ist es gemäß Anspruch 2 vorteilhaft, wenn der Schutzbügel in der Schutzstellung arretierbar ist. Durch diese Arretierung wird erreicht, daß der Fahrer während der Fahrt mit dem Fahrzeug durch den Schutzbügel ausreichend gesichert ist. Ein ungewolltes Verschwenken des Schutzbügels in die Wartungsstellung wird durch die Arretierung des Schutzbügels zuverlässig verhindert.

Zur Arretierung des Schutzbügels in der Schutzstellung hat sich gemäß Anspruch 3 ein verschiebbarer Arretierstift bewährt. Dieser Arretierstift greift in eine Ausnehmung ein, die an einem Teil montiert ist, welches am Fahrzeug oder am Schutzbügel selbst festgelegt ist. Um zu erreichen, daß der Arretierstift grundsätzlich in seiner arretierenden Lage verbleibt, ist er federnd gegen die Ausnehmung vorgespannt.

Gemäß Anspruch 4 ist es günstig, wenn der Arretierstift konisch ausgebildet ist. Auf diese Weise wird erreicht, daß sich der Arretierstift von selbst nachstellt, wenn sich von seiner Oberfläche Material durch Verschleißerscheinungen abgerieben hat. Auf diese Weise wird eine spielfreie Arretierung des Bügels gewährleistet.

Gemäß Anspruch 5 ist es vorteilhaft, wenn die Ausnehmung in einer Arretierplatte vorgesehen ist, die mit einer Einführschräge ausgerüstet ist. Diese Einführschräge drückt den Arretierstift gegen die Federkraft zurück, so daß dieser beim Überführen des Schutzbügels in die Schutzstellung selbsttätig in die Durchbrechung eingreift und den Schutzbügel arretiert.

Bei besonders kleinen Fahrzeugen steht im Bereich des Fahrersitzes oftmals nicht der erforderliche Platz zur Unterbringung des Rückhaltesystems zur Verfügung. In diesem Fall ist es gemäß Anspruch 6 günstig, wenn der Schutzbügel an einem Fahrzeugholm klemmend gehalten ist. Insbesondere ist daran gedacht, den Fahrzeugholm mit Klemmteilen zu umgreifen, so daß ein Anbohren des Fahrzeugholmes und damit eine Schwächung desselben entfallen kann.

Um bei klein bauenden Fahrzeugen den zur Verfügung stehenden Platz des Fahrers nicht unnötig zu beschränken, ist es gemäß Anspruch 7 günstig, wenn der Schutzbügel in etwa fluchtend zum Holm ausgerichtet ist. Auf diese Weise kann der Schutzbügel seine Schutzfunktion noch ausreichend erfüllen, da der Fahrer durch den Schutzbügel noch innerhalb der Holme des Fahrzeugs gehalten wird.

Bei engen Platzverhältnissen im Fahrzeug ist es gemäß Anspruch 8 vorteilhaft, wenn der Schutzbügel von seiner Anlenkung zu seinem freien Ende nach außen gekröpft ist. Auf diese Weise läßt sich die Anlenkung des Schutzbügels mit dem erforderlichen Verstellmechanismus bequem im Innenraum der Fahrzeugkabine unterbringen, während der Schutzbügel durch die Abkröpfung fluchtend zu den Holmen ausgerichtet sein kann.

Um zu verhindern, daß der Fahrer das Fahrzeug betreibt, während sich der Schutzbügel in der Wartungsstellung befindet, ist es gemäß Anspruch 9 günstig, wenn dem Schutzbügel bzw. dem Arretierstift mindestens ein Sensor bzw. Schalter zugeordnet ist. Dieser erfaßt die Lage des Schutzbügels und gibt diese Information an eine gesonderte Überwachungsvorrichtung weiter. Diese Überwachungsvorrichtung erlaubt den Fahrzeugbetrieb nur dann, wenn sich der Schutzbügel in der Schutzstellung befindet. Insbesondere ist daran gedacht, daß die Überwachungsvorrichtung den Betrieb des Fahrzeugs nur dann ermöglicht, wenn sich der Schutzbügel in der Schutzstellung und der Rückhaltestellung befindet, um den Fahrer optimal zu schützen.

Der Erfindungsgegenstand wird beispielhaft anhand der Zeichnung erläutert, ohne den Schutzumfang zu beschränken.

Es zeigt:
- Figur 1: eine schematische Seitenansicht eines Flurförderfahrzeugs,
- Figur 2: eine Rückansicht einer ersten Ausführungsform eines Schutzbügels,
- Figur 3: eine Seitenansicht einer zweiten Ausführungsform eines Schutzbügels und
- Figur 4: eine zugeordnete Ansicht des Schutzbügels gemäß Figur 3 von oben.

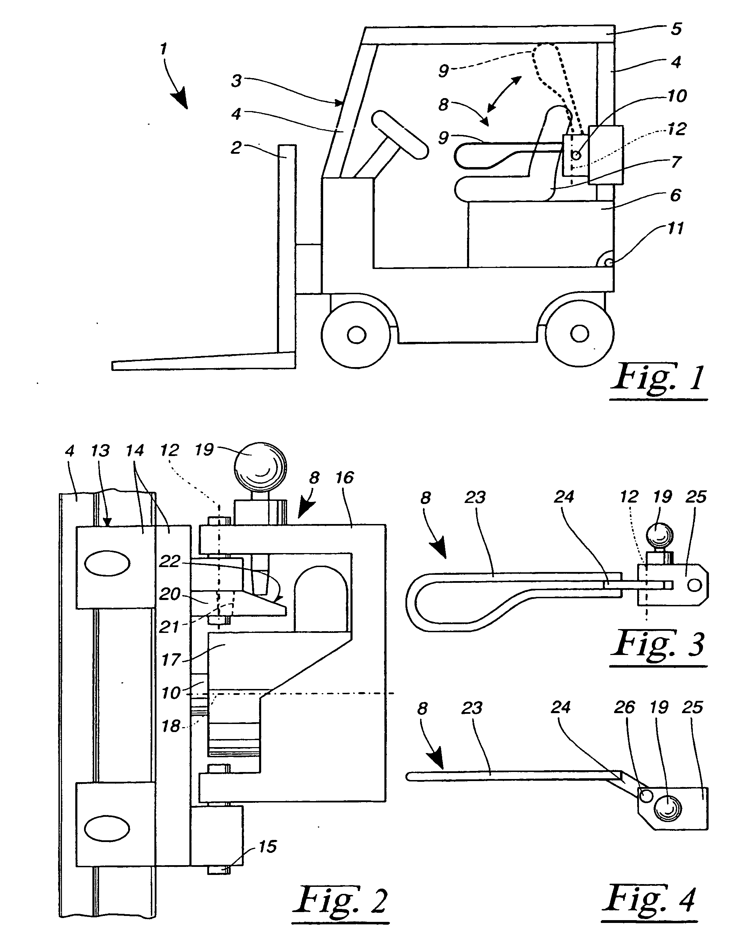

Figur 1 zeigt schematisch ein Flurförderfahrzeug 1, insbesondere einen Gabelstapler 1, der ein Hebewerkzeug 2 aufweist. Am Flurförderfahrzeug 1 ist eine offene Kabine 3 vorgesehen, die von vier im wesentlichen nach oben gerichteten Holmen 4 und einer Dachkonstruktion 5 gebildet ist.

Auf einer Motorhaube 6 ist ein Fahrersitz 7 untergebracht, dem seitlich ein Rückhaltesystem 8 zugeordnet ist. Dieses Rückhaltesystem 8 weist auf beiden Seiten des Fahrersitzes 7 angeordnete Schutzbügel 9 auf, die um eine Welle 10 zwischen einer dargestellten Rückhaltestellung und einer strichliert angedeuteten Freigabestellung verschwenkbar sind. Im Bereich der Welle 10 ist ein Mechanismus zum Verstellen und Arretieren des Schutzbügels 8 vorgesehen.

Die Motorhaube 6 wird durch Verschwenken um das Schwenklager 11 geöffnet, um Wartungsarbeiten im Flurförderfahrzeug 1 durchführen zu können. Bei kleinbauenden Flurförderfahrzeugen 1 kann es dabei vorkommen, daß der Schutzbügel 8 beim Öffnen der Motorhaube 6 gegen den heckseitigen Holm 4 oder gegen die Dachkonstruktion 5 schlägt. Um dies zu verhindern, ist der Schutzbügel 8 zusätzlich um eine vertikale Achse 12 verschwenkbar.

Die Schwenklagerung des Schutzbügels 8 wird anhand von Figur 2 näher erläutert. Am Holm 4 ist eine Klemmvorrichtung 13 abgestützt, die den Schutzbügel 8 trägt. Diese Klemmvorrichtung 13 besteht aus zwei gegeneinander spannbaren Backen 14, die den Holm 4 umgreifen.

An der Klemmvorrichtung 13 ist ein Drehgelenk 15 abgestützt, das die vertikale Schwenkachse 12 bildet. An diesem Drehgelenk 15 ist eine U-förmige Aufnahme 16 schwenkbar abgestützt, die einen Schwenkmechanismus 17 aufweist, der die Welle 10 antreibt. Dieser Schwenkmechanismus 17 sorgt für eine Verschwenkung des Schutzbügels 8 um eine quer zum Fahrzeug ausgerichtete Schwenkachse 18.

Zur Arretierung des Schutzbügels 8 in der nicht dargestellten Schutzstellung ist ein Arretierstift 19 vorgesehen. Dieser Arretierstift 19 ist in der U-förmigen Aufnahme 16 verschiebbar gelagert und federnd nach unten vorgespannt. An der Klemmvorrichtung 13 ist eine Arretierplatte 20 vorgesehen, die mit einer Bohrung 21 versehen ist. Sowohl der Arretierstift 19 als auch die Bohrung 21 sind konisch ausgebildet, um eine paßgenaue Arretierung der Aufnahme 16 zu bewirken. Die Arretierplatte 20 weist außerdem eine Einführschräge 22 auf, welche ein Zurückdrücken des Arretierstifts 19 beim Überführen des Schutzbügels 8 in die Schutzstellung bewirkt.

Die zugeordneten Darstellungen gemäß der Figuren 3 und 4 zeigen eine alternative Ausführungsform des Schutzbügels 8. Der Schutzbügel 8 weist einen Rückhalteabschnitt 23 auf, der von einem gebogenen Rohr gebildet ist. Dieser Rückhalteabschnitt 23 ist im Flurförderfahrzeug 1 derart angeordnet, daß er sich zwischen den Holmen 4 des Flurförderfahrzeugs 1 befindet. An den Rückhalteabschnitt 23 schließt sich eine Abkröpfung 24 an, die den Rückhalteabschnitt 23 mit einem Anlenkabschnitt 25 verbindet. In diesem Anlenkabschnitt 25 ist der Schutzbügel 8 mit dem Schwenkmechanismus 17 verbunden. Die Abkröpfung 24 ist derart ausgebildet, daß sich der Anlenkabschnitt 25 innerhalb der Kabine 3 des Flurförderfahrzeugs 1 befindet, während der Rückhalteabschnitt 23 zwischen den Holmen 4 zu liegen kommt.

Im Bereich der Abkröpfung 24 ist ein Drehgelenk 26 vorgesehen, das eine zusätzliche Verschwenkung des Schutzbügels 8 um die vertikale Achse 12 ermöglicht. Dieses Drehgelenk 26 wird vom Arretierstift 19 arretiert, der im Anlenkabschnitt 25 verschiebbar und federnd festgelegt ist.

### Bezugszeichenliste

- 1: Flurförderfahrzeug
- 2: Hebewerkzeug
- 3: Kabine
- 4: Holm
- 5: Dachkonstruktion
- 6: Motorhaube
- 7: Fahrersitz
- 8: Rückhaltesystem
- 9: Schutzbügel
- 10: Welle
- 11: Schwenklager
- 12: Achse
- 13: Klemmvorrichtung
- 14: Backe
- 15: Drehgelenk
- 16: Aufnahme
- 17: Schwenkmechanismus
- 18: Schwenkachse
- 19: Arretierstift
- 20: Arretierplatte
- 21: Bohrung
- 22: Einführschräge
- 23: Rückhalteabschnitt
- 24: Abkröpfung
- 25: Anlenkabschnitt
- 26: Drehgelenk

## Patentansprüche

1. Rückhaltesystem für einen Fahrer eines Fahrzeugs (1), insbesondere eines Flurförderfahrzeugs (1), das zumindest einen Fahrersitz (7) aufweist, wobei das Rückhaltesystem (8) von mindestens einem seitlich neben dem Fahrersitz (7) angeordneten Schutzbügel (9) gebildet ist, der durch eine horizontale, quer zur Fahrzeuglängserstreckung verlaufende Welle (10) aus einer in etwa vertikalen Freigabestellung in eine in etwa horizontale Rückhaltestellung verschwenkbar ist, **dadurch gekennzeichnet, daß** der Schutzbügel (9) zwischen einer in etwa längs zum Fahrzeug (1) ausgerichteten Schutzstellung und einer Wartungsstellung quer zum Fahrzeug (1) verstellbar ist.

2. Rückhaltesystem nach Anspruch 1, **dadurch gekennzeichnet, daß** der Schutzbügel (9) in der Schutzstellung arretierbar ist.

3. Rückhaltesystem nach Anspruch 2, **dadurch gekennzeichnet, daß** dem Schutzbügel (9) mindestens ein verstellbarer Arretierstift (19) zugeordnet ist, der in eine fahrzeug- oder schutzbügelfeste Ausnehmung (21) greift und federnd gegen diese vorgespannt ist.

4. Rückhaltesystem nach Anspruch 3, **dadurch gekennzeichnet, daß** der Arretierstift (19) konisch ausgebildet ist.

5. Rückhaltesystem nach Anspruch 2 oder 3, **dadurch gekennzeichnet, daß** die Ausnehmung (21) in einer Arretierplatte (20) vorgesehen ist, die mit einer Einführschräge (22) ausgerüstet ist.

6. Rückhaltesystem nach mindestens einem der Ansprüche 1 bis 5, **dadurch gekennzeichnet, daß** der Schutzbügel (9) in eingebautem Zustand an einem Fahrzeugholm (4) klemmend gehalten ist.

7. Rückhaltesystem nach Anspruch 6, **dadurch gekennzeichnet, daß** der Schutzbügel (9) in eingebautem Zustand in etwa fluchtend zum Holm (4) ausgerichtet ist.

8. Rückhaltesystem nach mindestens einem der Ansprüche 1 bis 7, **dadurch gekennzeichnet, daß** der Schutzbügel (9) von seiner Anlenkung (25) zu seinem freien Ende (23) nach außen gekröpft ist.

9. Rückhaltesystem nach mindestens einem der Ansprüche 1 bis 8, **dadurch gekennzeichnet, daß** dem Schutzbügel (9) und/oder dem Arretierstift (19) mindestens ein Sensor und/oder Schalter zugeordnet ist, der mit einer Überwachungsvorrichtung in Wirkverbindung steht, welche nur bei in der Schutzstellung befindlichem Schutzbügel (9) den Betrieb des Fahrzeugs (1) ermöglicht.

## Claims

1. Restraint system for a driver of a vehicle (1), in particular an industrial truck (1), which has at least one driver's seat (7), the restraint system (8) being formed by at least one protective bracket (9), which is arranged laterally next to the driver's seat (7) and can be pivoted, by a horizontal shaft (10) extending transversely with respect to the longitudinal extent of the vehicle, from an approximately vertical release position into an approximately horizontal restraint position, **characterized in that** the protective bracket (9) can be adjusted between a guard position, which is aligned approximately longitudinally with respect to the vehicle (1), and a maintenance position transverse with respect to the vehicle (1).

2. Restraint system according to Claim 1, **characterized in that** the protective bracket (9) can be locked in the guard position.

3. Restraint system according to Claim 2, **characterized in that** the protective bracket (9) has at least one adjustable locking pin (19) associated with it which engages in a cutout (21) in the vehicle or on the protective bracket and is resiliently prestressed with respect to said cutout (21).

4. Restraint system according to Claim 3, **characterized in that** the locking pin (19) is conical.

5. Restraint system according to Claim 2 or 3, **characterized in that** the cutout (21) is provided in a locking plate (20) which is equipped with an insertion bevel (22).

6. Restraint system according to at least one of Claims 1 to 5, **characterized in that**, in the installed state, the protective bracket (9) is held in a clamping manner on a vehicle spar (4).

7. Restraint system according to Claim 6, **characterized in that**, in the installed state, the protective bracket (9) is aligned approximately flush with the spar (4).

8. Restraint system according to at least one of Claims 1 to 7, **characterized in that** the protective bracket (9) is bent back towards the outside from its articulation (25) to its free end (23).

9. Restraint system according to at least one of Claims 1 to 8, **characterized in that** the protective bracket (9) and/or the locking pin (19) has at least one sensor and/or switch associated with it, said sensor and/or switch being operatively connected to a monitoring device which makes operation of the vehicle (1) possible only when the protective bracket (9) is located in the guard position.

## Revendications

1. Système de retenue pour un conducteur d'un véhicule (1), notamment un chariot de manutention (1), lequel présente au moins un siège de conducteur (7), le système de retenue (8) étant formé par au moins un arceau de protection (9) disposé latéralement à côté du siège du conducteur (7) et qui peut être pivoté par un arbre (10) horizontal qui s'étend transversalement par rapport à la projection longitudinale du véhicule d'une position de libération approximativement verticale en une position de retenue approximativement horizontale, **caractérisé en ce que** l'arceau de protection (9) peut être positionné entre une position de protection dirigée approximativement longitudinalement par rapport au véhicule (1) et une position d'attente transversale par rapport au véhicule (1).

2. Système de retenue selon la revendication 1, **caractérisé en ce que** l'arceau de protection (9) peut être bloqué en position de protection.

3. Système de retenue selon la revendication 2, **caractérisé en ce qu'**à l'arceau de protection (9) est associé au moins une goupille d'arrêt (19) positionnable qui pénètre dans un creux (21) fixe sur le véhicule ou l'arceau de protection et qui est précontrainte par un ressort contre celui-ci.

4. Système de retenue selon la revendication 3, **caractérisé en ce que** la goupille d'arrêt (19) est de forme conique.

5. Système de retenue selon la revendication 2 ou 3, **caractérisé en ce que** le creux (21) est prévu dans une plaque d'arrêt (20) qui est équipée d'un biseau d'introduction (22).

6. Système de retenue selon au moins l'une des revendications 1 à 5, **caractérisé en ce que** l'arceau de protection (9), en position montée, est maintenu par serrage à un longeron du véhicule (4).

7. Système de retenue selon la revendication 6, **caractérisé en ce que** l'arceau de protection (9), en position montée, est dirigé approximativement dans l'alignement du longeron (4).

8. Système de retenue selon au moins l'une des revendications 1 à 7, **caractérisé en ce que** l'arceau de protection (9) est courbé vers l'extérieur entre son articulation (25) et son extrémité libre (23).

9. Système de retenue selon au moins l'une des revendications 1 à 8, **caractérisé en ce qu'**à l'arceau de protection (9) et/ou à la goupille d'arrêt (19) est associé au moins un capteur et/ou un commutateur qui est en liaison active avec un dispositif de surveillance qui ne permet le fonctionnement du véhicule (1) que lorsque l'arceau de protection (9) se trouve en position de protection.
